# EUROPEAN PATENT SPECIFICATION

(11) **EP 1 483 931 B1**
(45) Date of publication and mention of the grant of the patent: **29.08.2012**
(21) Application number: 03711121.8
(22) Date of filing: 18.02.2003
(51) Int. Cl.: H04W 28/20, H04W 72/04

(54) **ALLOCATION OF ADDITIONAL BANDWIDTH TO A MOBILE TERMINAL BASED ON USER PROVIDED INDICATION**
ZUTEILUNG ZUSÄTZLICHER BANDBREITE AN EIN MOBILGERÄT BASIEREND AUF EINER VOM NUTZER BEREITGESTELLTEN INDIKATION
ALLOCATION DE BANDE PASSANTE SUPPLÉMENTAIRE À UN TERMINAL MOBILE SUR LA BASE D'UNE INDICATION FOURNIE PAR L'UTILISATEUR

(30) Priority: 11.03.2002 US 363727 P; 13.02.2003 US 367409
(43) Date of publication of application: 08.12.2004
(73) Proprietor: Siemens Corporation, Iselin, NJ 08830 (US)
(72) Inventor: LIAO, Raymond Rui-Feng, Pleasant Hill, CA 94523 (US); CHENG, James, San Ramon, CA 94583 (US)
(74) Representative: Wheatley, Alison Clare
(86) International application number: PCT/US2003/004939
(87) International publication number: WO 2003/079715

(56) References cited:
- WO-A-01/47182
- US-A- 6 031 845

## Description

### BACKGROUND

The present disclosure relates generally to electronic communications and, more particularly, to allocation of bandwidth in a shared communication system among competing communication units or among competing applications.

In shared communication systems, allocation of bandwidth among competing users may be problematic. One common approach is to assign an equal quantity of bandwidth to each active user, as is typically done in cellular radio telephone systems (hereinafter sometimes referred to as "cellular phone systems"). This approach is less than ideal for situations in which some users need or desire more bandwidth than the standard quantity of bandwidth allocated to each active user. For example, a user of a cellular phone may be running more than one application on the cellular phone, or may be running an application that is bandwidth-intensive. In such a case, it would be desirable to allocate additional bandwidth to the cellular telephone in question.

Both the 3GPP system (which is the third generation cellular system for the Global System for Mobile communications (GSM)) and the 3GPP2 system (which is the third generation cellular system for the Code Division Multiple Access (CDMA) system) allow for assignment of more than one channel to a mobile device to provide a Quality of Service (QoS) while maintaining high spectrum utilization. However, the QoS parameters for cellular bearer services are quite complicated, in that there are four service classes-(a) Conversational Real-time; (b) Streaming Real-time; (c) Interactive Best Effort; and (d) Background Best Effort-of which each has a number of the following twelve attributes: (1) Maximum bit rate; (2) Delivery order; (3) Maximum SDU (service data unit) size; (4) SDU format information; (5) SDU error ratio; (6) Residual bit error ratio; (7) Delivery of erroneous SDUs; (8) Transfer delay (95^{th} percentile); (9) Guaranteed bit rate; (10) Traffic handling priority; (11) Allocation/Retention priority; and (12) Source statistics descriptor. More specifically, the Streaming Real-time service class has all of these attributes; the Conversational Real-time service class has all of these attributes except Traffic handling priority; the Background Best Effort service class has all of the attributes except SDU format information, Transfer delay, Guaranteed bit rate, Traffic handling priority and Source statistics descriptor; and the Interactive Best Effort service class has the same attributes as Background Best Effort with the addition of Traffic handling priority.

It is very challenging to map this array of bearer service attributes into network and application level QoS standards. Moreover, the complexity of bearer service attributes tends to necessitate a complicated API (application programming interface) for development of wireless applications. This may impede development of new wireless applications, and may inhibit growth of utilization of wireless services.

Further, the existing QoS mechanisms still face a basic problem that service "guarantees" are offered only on a best effort basis and without quantifiable quality assurance statistics. Service providers are more or less forced to avoid fixed performance standards because of the dynamic characteristics of wireless links and radio resource management mechanisms. Customers therefore can never be assured as to the level of service that they will receive.

As suggested above, a user's demand for bandwidth may vary over time due to changes in the number and/or characteristics of applications currently running on a mobile unit. Demand for bandwidth may also vary because of dynamic variations in signal quality due to movement by the user, or due to factors such as path loss, fading and interference, which may occur whether or not the user is moving. Existing bandwidth allocation techniques do not adequately accommodate changes in demand for bandwidth.

It would be desirable to afford users control over the quantity of bandwidth that is dynamically allocated to their mobile units. More generally, it would be desirable to improve techniques for allocating bandwidth among competing users and/or among competing applications.

US6031845 discloses a bandwidth management system for maintaining information about allocation of maximum call data bandwidth amongst current calls and bandwidth is allocated with reference to this information.

### SUMMARY

The object of the present invention is achieved by a method according to the subject-matter of independent Claim 1 and by a communication unit according to the subject-matter of independent claim 6. Preferred features are set out in the dependent claims.

Further aspects of the instant system will be more readily appreciated upon review of the detailed description of the specific embodiments included below when taken in conjunction with the following drawings.

### BRIEF DESCRIPTION OF THE DRAWINGS

FIG. 1 is a simplified block diagram of a cellular phone in connection with which aspects of the present invention may be applied;
FIG. 2 is a schematic simplified block diagram of a cellular phone system which includes the cellular phone of FIG. 1;
FIG. 3 is simplified block diagram representation of software provided in the cellular phone of FIG. 1 in accordance with some aspects of the present invention;
FIG. 4 is a flowchart depicting a bandwidth allocation process performed by the cellular phone of FIG. 1 according to some aspects of the present invention;
FIGS. 5A and 5B are exemplary screen displays that may be provided by the cellular phone of FIG. 1 according to some embodiments of the invention;
FIG. 6 is a flowchart depicting a bandwidth allocation process performed by the cellular phone system of FIG. 2 according to some embodiments of the invention;
FIG. 7 is a graphical illustration of a bandwidth allocation algorithm that may be performed by the cellular phone of FIG. 1 and/or by the cellular phone system of FIG. 2;
FIG. 8 is a flowchart depicting a bandwidth allocation process performed according to an example useful for understanding the invention; and
FIG. 9 is a flowchart depicting a local optimization algorithm that is part of the process of FIG. 8.

### DETAILED DESCRIPTION OF SPECIFIC EMBODIMENTS

According to some embodiments, a communication unit such as a cellular phone provides to a user a display that indicates a quantity of bandwidth that is currently allocated to the communication unit. The display may also indicate one or more additional quantities of bandwidth that are available for allocation to the communication unit. The communication unit may be configured to allow the user to indicate that the user desires that one or more of the available quantities of bandwidth be allocated to the communication unit. The display may be in the form of a bar graph or meter bar. Shaded bars or meter bar segments may indicate the quantity of bandwidth currently allocated to the communication unit. Unshaded bars or meter bar segments may indicate available but unallocated quantities of bandwidth. Bars or meter bar segments indicated with dashed lines may indicate quantities of bandwidth which are not available for allocation to the communication unit.

The display may be provided on a touch screen. A region of the touch screen may be actuatable by the user to indicate that an available quantity of bandwidth is to be allocated to the communication unit. Alternatively, the display need not be a touch screen, and a soft-key may be used to indicate that an available quantity of bandwidth is to be allocated to the communication unit. The user may be provided with options to select which application running on the communication unit is to receive allocation of the additional bandwidth. The options may be presented on a touch screen.

The communication unit may perform an algorithm to allocate additional bandwidth among competing applications. The algorithm may include examining respective service valuation functions of each of the competing applications, and each service valuation function may have a respective current operating point. An application is selected on the basis of the respective slopes of the service valuation functions at their respective current operating points. That is, an application having the highest slope (or with a slope that is tied for highest) is selected. All of the additional bandwidth may be allocated to the selected application. This algorithm may be referred to as "local optimization".

In allocating additional bandwidth, the communication unit may select between local optimization and another algorithm known as "complete optimization". In the complete optimization algorithm, an optimal allocation of bandwidth is determined by considering all possible operating points of the service valuation functions of all of the competing applications to generate an optimal aggregated service valuation function for the group of competing applications. When additional bandwidth becomes available, complete optimization calls for the aggregated service valuation function to be re-determined (updated) in view of the increased total bandwidth that is available. The respective updated operating points for the competing applications are determined based on the updated aggregated service valuation function, and the available bandwidth is allocated in accordance with the updated operating points. With complete optimization, the additional bandwidth may be allocated among more than one of the applications, and with the updated aggregated service valuation function, in some cases bandwidth that was previously allocated to one or more of the applications may be taken away.

The selection between local and complete optimization may be made on a periodic basis. For example, complete optimization may be performed at regular time intervals, and every intervening allocation of bandwidth may be performed using local optimization.

The bandwidth allocation techniques described above may be applied in other environments. For example, these techniques may be employed by a cellular phone system to allocate bandwidth among competing cellular phones.

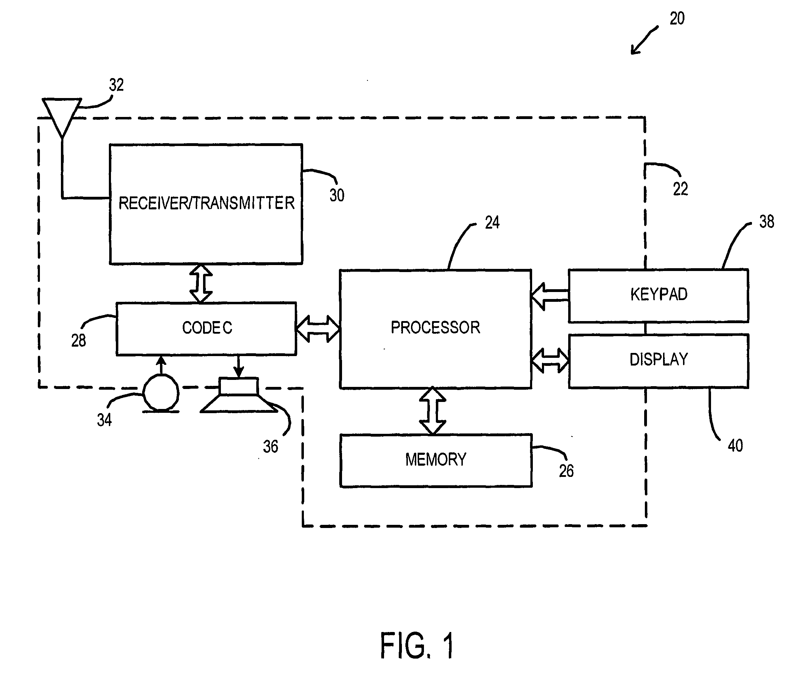

FIG. 1 is a partial schematic block diagram of a cellular radio telephone (cellular phone) in which certain aspects of the present invention may be applied. Reference numeral 20 generally indicates the cellular phone. The cellular phone 20 may be completely or largely conventional in terms of its physical components, and may be programmed to perform certain functions in accordance with aspects of the present invention.

The cellular phone 20 includes a housing 22, which is represented by a dashed line. The housing 22 may be shaped and sized to fit in a user's hand. Other components of the cellular phone 20, which are described below, are mounted on or within the housing 22.

The cellular phone 20 also includes a processor 24, which may be a conventional microprocessor, microcontroller and/or digital signal processor (DSP) or other control circuit conventionally provided in a cellular phone. Also included in the cellular phone 20 are memory components 26, which may include one or more of ROM (read only memory), RAM (random access memory, e.g., static RAM), and flash memory. The processor 24 is in data communication with the memory components 26. The memory components 26 may store software programs that control operation of the processor 24. Some of the software may be conventional. Other portions of the software may be provided in accordance with the present invention to cause the processor 24 to perform functions that are described below.

A conventional codec (coder/decoder) 28 is also included in the cellular phone 20 and is in data communication with the processor 24. A conventional receiver/transmitter 30 is operatively coupled to the codec 28 and is also operatively coupled to a conventional antenna 32. A conventional microphone 34 is operatively coupled to the codec 28 to provide voice input signals to the codec 28. A conventional speaker 36 is also operatively coupled to the codec 28 and is driven by the codec 28 to provide audible output.

The user interface of the cellular phone 20 includes a keypad 38 and a display 40, which are both operatively coupled to the processor 24. The keypad 38 may be a conventional 12-key telephone keypad, by which the user may provide dialing and other input to the processor 24. The keypad may also include one or more soft-keys, as discussed below. In some embodiments, the display 40 is a touch screen capable of both outputting data to the user under the control of the processor 24 and receiving manual input from the user for the processor 24. In other embodiments, the display 40 is not a touch screen and therefore only outputs data to the user. In such cases, all user inputs, including inputs described below, are provided to the processor 24 via the keypad 38 and/or via other keys or buttons which are not separately shown.

It will be understood that the block diagram representation in FIG. 1 of the cellular phone 20 is simplified in a number of ways. For example, all power, and power management components of the cellular phone 20 are omitted from the drawing.

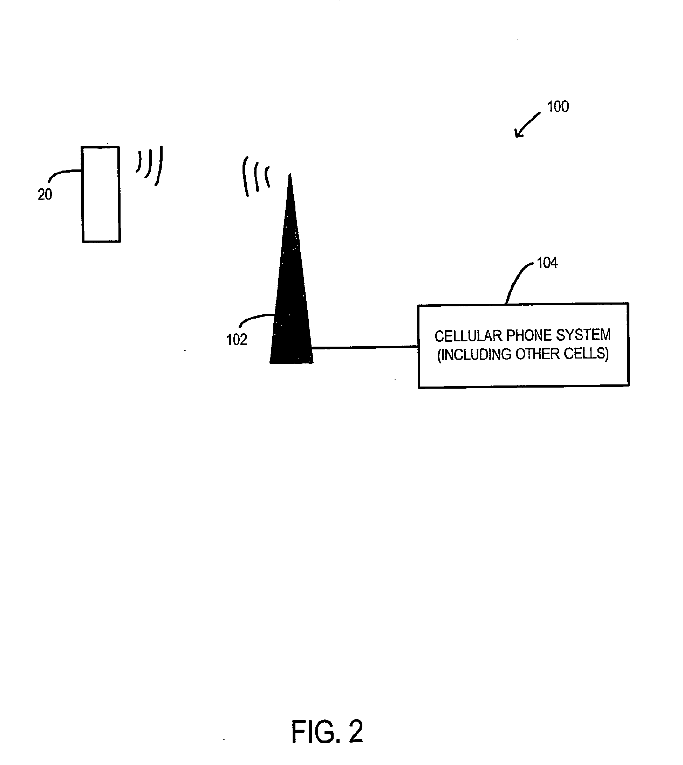

FIG. 2 is a simplified schematic block diagram of a cellular phone system 100 with which the cellular phone 20 operates. The system 100 includes a cell antenna tower 102, with which the cellular phone 20 is in wireless communication. The system 100 also includes other system components, represented by block 104, at least some of which are operatively coupled to the antenna tower 102. The other system components 104 may include other antenna towers, transmitter/receivers, switching facilities, other cellular phones, and controllers. The controllers may be constituted by conventional server computer hardware. In some embodiments, at least some of the controllers are programmed to perform functions in accordance with some aspects of the invention.

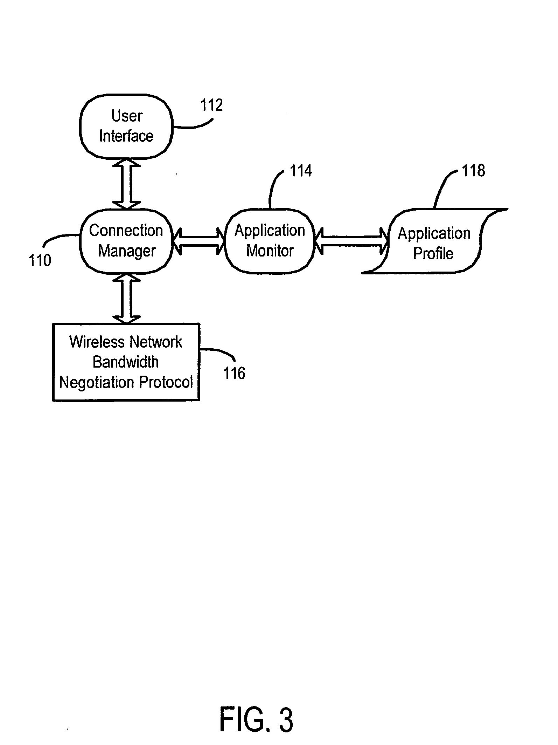

FIG. 3 is a block diagram representation of some components of software that is stored in the memory 26 (FIG. 1) of the cellular phone 20 and which controls the processor 24. The software modules shown in FIG. 3 include a connection manager module 110, a user interface module 112, an application monitor module 114, and a wireless network bandwidth negotiation protocol module 116. The connection manager module 110 interacts with the user interface module 112, the application monitor module 114 and the wireless network bandwidth negotiation protocol 116. Among other functions, the connection manager module 110 causes the wireless network bandwidth negotiation protocol module 116 to obtain additional bandwidth in response to a user request for the same, in accordance with a feature of the present invention to be described in more detail below. The connection manager module 110 also tracks the amount of bandwidth currently allocated to the cellular phone 20.

The wireless network bandwidth negotiation protocol module 116 interacts with the cellular phone system 100, in accordance, e.g., with the PDP (Packet Data Protocol) context activation/modification protocol of the 3GPP system or the PPP (Point-to-Point Protocol) logical channel negotiation protocol of the 3GPP2 system, to obtain additional bandwidth allocations as directed from time to time by the connection manager module 110.

The application monitor module 114 interacts with the connection manager module 110 and tracks the bandwidth usage of currently active applications. As will be appreciated by those who are skilled in the art, the cellular phone 20 may be configured to run plural applications at the same time, including a conventional voice communication application, one or more text/graphics data download applications, one or more video data download applications, one or more game applications, one or more text messaging applications, etc. The application monitor module 114 may retrieve from the cellular phone's operating system (which is not indicated in the drawing) the information concerning bandwidth usage by applications. In some embodiments, the application monitor module 114 may operate to identify an application that is most active in bandwidth usage and to cause additional bandwidth requested by the connection manager 110 and obtained via the wireless network bandwidth negotiation protocol module 116 to be allocated to the application which was identified as the most active. In other embodiments, the user may be permitted to select the application which is to receive the additional bandwidth.

The application monitor module 114 stores information on binding between bearer service channels and applications in an application profile store 118. The binding information may be obtained by the application monitor module 114 from a PDP Configuration Options parameter of a PDP context activation/modification message (in the 3GPP system) received via the wireless network bandwidth negotiation protocol module 116. The context activation/modification message contains flow identifiers that uniquely identify IP (internet protocol) media flows sharing the same PDP context. Similar flow information is available in the 3GPP2 system.

The user interface module 112 interacts with the connection manager module 110 and manages the keypad 38 and the display 40. More specifically, the user interface module 112 receives user input via the keypad 38 and also, if the display 40 is a touch screen, via the display 40. The user interface module 112 also outputs information to the user via the display 40. In some embodiments, the information displayed to the user via the display 40 includes information indicative of quantities of bandwidth currently allocated to the cellular phone 20 and additional quantities of bandwidth that are not allocated to the cellular phone 20 but that are or may be available for allocation to the cellular phone 20 upon request from the user. This display of information is described in more detail below.

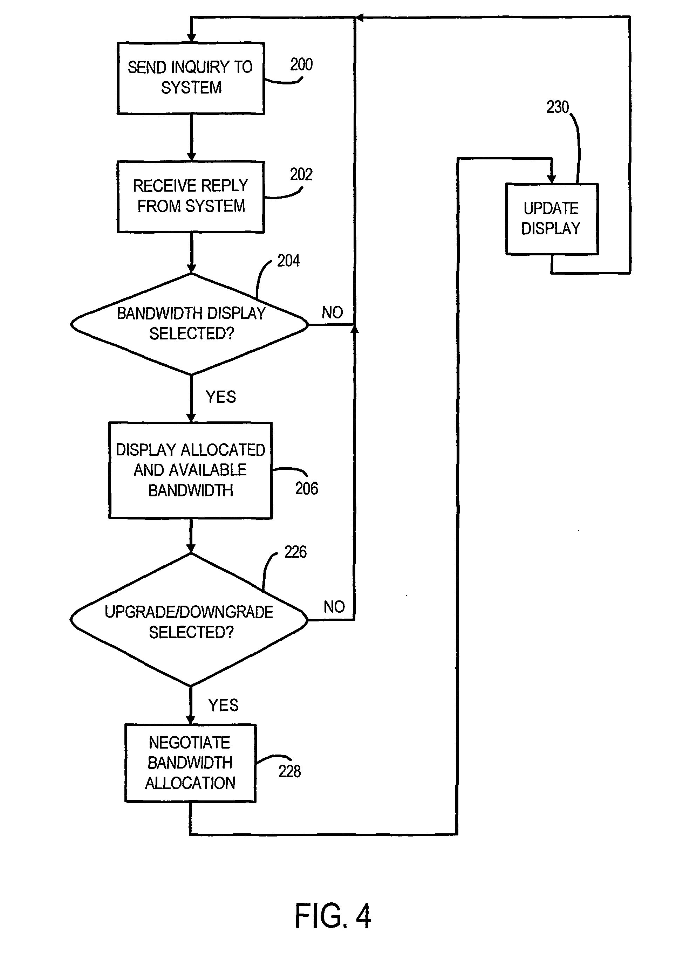

FIG. 4 is a flowchart that depicts a process carried out in accordance with the invention to inform a user of the cellular phone 20 of additional bandwidth that is or may be available and to allow the user to obtain allocation of the additional bandwidth to the cellular phone 20.

At 200, the cellular phone 20 sends an inquiry to the system 100 to determine whether additional bandwidth is available. At 202, the cellular phone 20 receives a reply from the system 100 indicating to what extent additional bandwidth is available. At 204, it is determined by the cellular phone 20 whether the user has requested the bandwidth availability display. In some embodiments, the user may be presented via the display 40 with a menu of device management functions and one of the functions available to the user via the menu may be the bandwidth availability display. Thus the determination made at 204 may be a determination as to whether the user has selected the bandwidth availability display from the menu.

If a negative determination is made at 204, then the process of FIG. 4 loops back to 200 and 202. In some embodiments, the cellular phone may inquire as to bandwidth availability at regular intervals. In other embodiments, the inquiry may be sent only in response to a positive determination at 204.

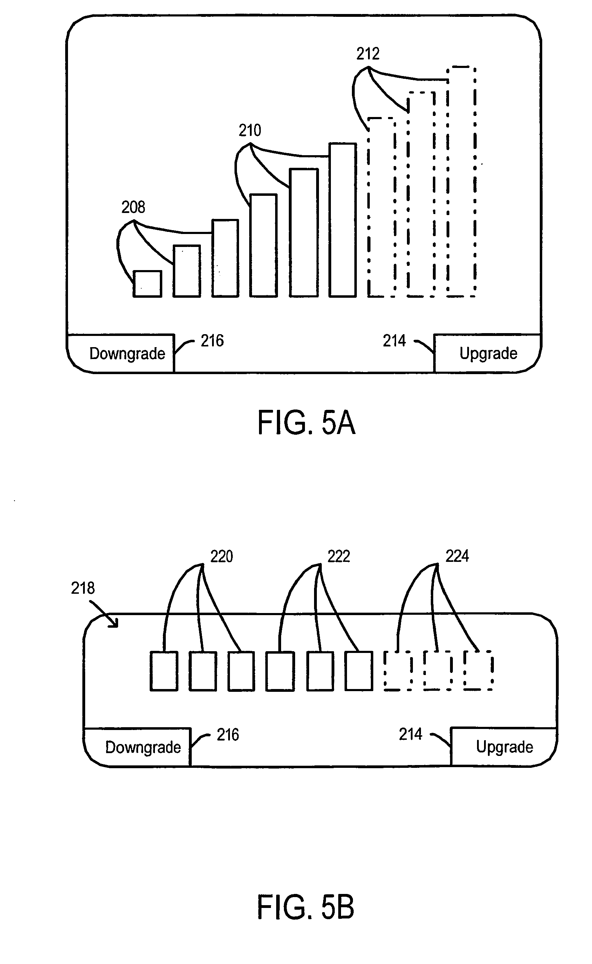

In any case, in some embodiments illustrated in FIG. 4, after a positive determination at 204, the display 40 provides a display that indicates quantities of bandwidth currently allocated to the cellular phone 20 and unallocated but available quantities of bandwidth, as indicated at 206 in FIG. 4. Examples of such a display provided by the display 40 are depicted in FIGS. 5A and 5B.

The display depicted in FIG. 5A is generally in the format of a bar graph. The display of FIG. 5A includes shaded bars 208, each of which represents a quantity of bandwidth which is currently allocated to the cellular phone 20. The display of FIG. 5A also includes unshaded bars 210, each of which represents a quantity of bandwidth which is not currently allocated to the cellular phone 20 but which is available for allocation to the cellular phone 20. Also included in the display of FIG. 5A are phantom bars 212, which are indicated with dashed lines, and each of which represents a quantity of bandwidth that may be available for allocation to the cellular phone 20 under some circumstances, but which is not currently available for allocation to the cellular phone 20 in view of current network conditions. In some embodiments, each bar 212 may correspond to a respective 9.6 Kb/s channel. In such a case, the display shown in FIG. 5 would indicate that three channels are currently allocated to the cellular phone 20, that three additional channels are available for allocation to the cellular phone 20 but are not currently allocated to the cellular phone 20, and that three further channels are not available for allocation to the cellular phone 20.

In other embodiments, the bars shown in FIG. 5A may be mapped to bandwidth in a different manner. For example, the bars may map to a set of channels consisting of 9.6, 19.2, 38.4, 76.8, 153.6, 307.2 and 614.4 Kb/s channels. In this mapping, each additional bar that is shaded corresponds to a doubling of the bandwidth allocated to the cellular phone 20. (In this case, the total number of bars may be seven, rather than the nine bars shown in FIG. 5A.) Other mappings of bars to quantities of bandwidth are also contemplated.

The display of FIG. 5A also includes an "upgrade" region 214 and a "downgrade" region 216. As will be seen, in some embodiments the user may use these regions to respectively request or relinquish quantities of bandwidth. In some embodiments, the display 40 may be a touch screen. In other embodiments, the display 40 may not be a touch screen, and in place of the regions 214, 216, legends such as the following may be displayed: 'Press "#" to upgrade' and 'Press "*" to downgrade'. As another alternative, there may be soft-keys associated with the regions 214, 216. As is understood by those who are skilled in the art, a soft-key is a physical key or button for which the function changes according to a screen display.

FIG. 5B presents essentially the same information as FIG. 5A in a somewhat different format. The display of FIG. 5B is generally in the format of a meter bar 218. The meter bar 218 includes shaded bar segments 220, each of which represents a quantity of bandwidth that is currently allocated to the cellular phone 20. The meter bar 218 also includes unshaded bar segments 222, each of which represents a quantity of bandwidth which is not currently allocated to the cellular phone 20 but which is available for allocation to the cellular phone 20. Also included in the meter bar 218 are phantom bar segments 224, which are indicated with dashed lines, and each of which represents a quantity of bandwidth that may be available for allocation to the cellular phone 20 under some circumstances, but which is not currently available for allocation to the cellular phone 20 in view of current network conditions. The display of FIG. 5B also has the same upgrade region 214 and the same downgrade region 216 as in FIG. 5A. The mapping of the bar segments 220, 222, 224 of the meter bar 218 to quantities of bandwidth may be like the mapping of bars 208, 210, 212 to quantities of bandwidth as discussed in connection with FIG. 5A.

Referring again to FIG. 4, after 206 it is determined at 226 whether the user has selected an upgrade or downgrade of the bandwidth allocated to the cellular phone 20. An "upgrade" refers to a request for allocation to the cellular phone 20 of an additional quantity of bandwidth, and a "downgrade" refers to a request to relinquish a quantity of the bandwidth currently allocated to the cellular phone 20. The user may indicate selection of an upgrade by pressing the upgrade region 214 shown in FIG. 5A or 5B (or, in other embodiments, by pressing another button, e.g., a soft-key or a suitable key of the keypad 38), and may indicate selection of a downgrade by pressing the downgrade region 216 shown in FIG. 5A or 5B (or, in other embodiments, by pressing another button, e.g., a soft-key or a suitable key of the keypad 38).

If a positive determination is made at 226, then the cellular phone 20 negotiates a new bandwidth allocation with the system 100, as indicated at 228 in FIG. 4, and in accordance with the input provided by the user. Thus, if the user has selected an upgrade, the cellular phone requests and receives allocation of an additional quantity of bandwidth. If the user has selected a downgrade, the cellular phone requests to relinquish a quantity of bandwidth, and the system reduces the amount of bandwidth allocated to the cellular phone. Then, as indicated at 230, the display provided by the display 40 is updated to indicate the increase or decrease in currently allocated bandwidth. After 230, the process of FIG. 4 loops back to 200. Also, if a negative determination is made at 226, the process of FIG. 4 loops back to 200 after 226. The display provided at 206 may persist for a predetermined period of time and/or until the user makes a menu selection or takes other action to cause a change in the display.

To provide a somewhat more concrete example, suppose the user of the cellular phone 20 perceives that one or more applications running on the cellular phone are not performing satisfactorily. The user may then select the bandwidth availability display, and as a result, a display like those shown in FIGS. 5A and 5B may be provided by the display 40 of the cellular phone. As discussed above, the presence in the display of unshaded bars 210 or unshaded bar segments 222 indicates that additional quantities of bandwidth are available for allocation to the cellular phone. The user may next press the upgrade region 214 or an associated soft-key to select an upgrade. The cellular phone then requests and obtains from the system 100 an additional allocation of bandwidth.

In some embodiments, the user may be prompted to select the application which is to receive the allocation of the additional bandwidth. For example, a suitable screen may pop up listing the currently running applications and prompting the user to select one of the applications for a bandwidth upgrade. In other embodiments, the cellular phone (via the application monitor module 114) may automatically select for upgrade the application that is most active in bandwidth usage. In other embodiments, the cellular phone may automatically select an application to be upgraded based on an algorithm or algorithms which are described below. In some embodiments, the user may select between automatic allocation of an upgrade among applications and user-directed allocation.

In any case, by whatever method an application is selected for upgrading, and the additional quantity of bandwidth is assigned to the selected application. Of course, if only one application is currently running on the cellular phone, then the additional bandwidth is provided to that application. Then the display is updated to indicate the increased amount of bandwidth currently allocated to the cellular phone 20. For example, the display shown in FIG. 5A may be changed so that the first unshaded bar becomes shaded.

In some situations (e.g., because of network conditions), no additional bandwidth may be available for allocation to the cellular phone. In these cases, either all the bars presented (in the bar graph example of FIG. 5A) may be shaded, or all the bars presented may be either shaded or phantom. In these cases, the upgrade region may be omitted from the display.

In other situations, the network conditions may change while the display is being provided such that additional bandwidth becomes available. In these cases, the first phantom bar may be changed to an unshaded bar to indicate the increase in available, but unallocated, bandwidth.

When the current allocation of bandwidth to the cellular phone is at its lowest permissible level, the downgrade region may be omitted from the display.

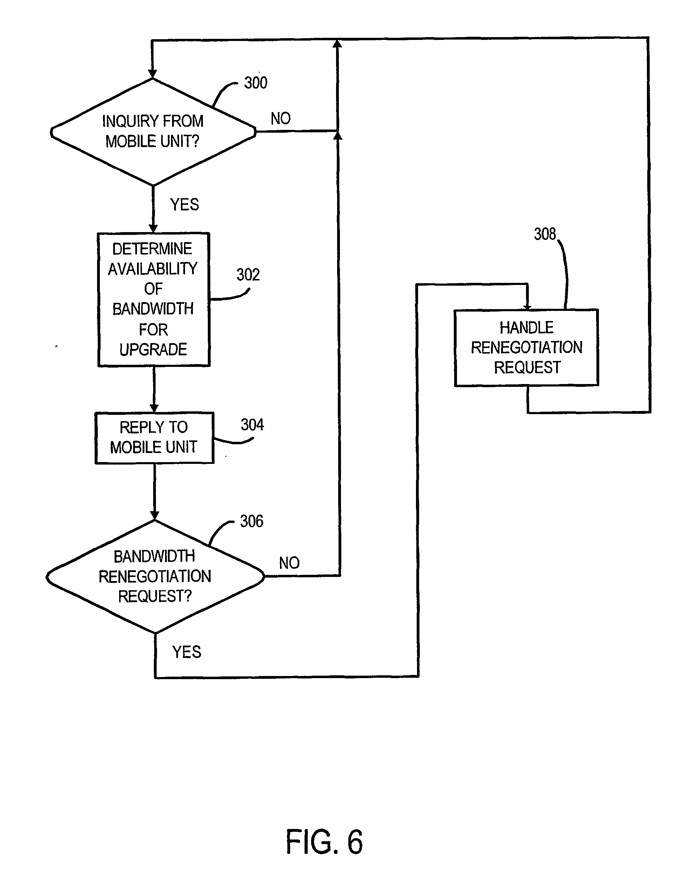

FIG. 6 is a flowchart that depicts a process performed by the system 100 in accordance with some aspects of the invention. The process depicted in FIG. 6 is complementary to the process depicted in FIG. 4 and performed in the cellular phone. The process depicted in FIG. 6 may be implemented with software provided in accordance with the invention and which is stored and which controls one or more of the controllers (not separately shown) that are part of the system 100 shown in FIG. 2.

At 300 in FIG. 6, it is determined whether the system 100 has received from a mobile unit such as a cellular phone an inquiry concerning whether additional bandwidth is available for allocation to the mobile unit. If no such inquiry is received, then the process of FIG. 6 may loop back. However, if such an inquiry is received, then the system 100 determines, as indicated at 302, whether additional bandwidth is available for allocation to the mobile unit. This determination may be based on one or more of the current network conditions, the time of day, the day of the week, and the service plan which is applicable to the mobile unit which made the inquiry.

At 304 the system replies to the mobile unit to indicate the result of the determination made at 302. Then, at 306, it is determined whether the system receives a request from a mobile unit to renegotiate the amount of bandwidth currently allocated to the mobile unit. If a negative determination is made at 306, the process of FIG. 6 may loop back. If a positive determination is made at 306, the system handles the renegotiation request, as indicated at 308. The process then loops back.

From previous discussion, it will be understood that the renegotiation request may be either a request for an upgrade or a request for a downgrade. One advantage of the present application is that the mobile units do not request upgrades unless the user has been informed (e.g., via a display as indicated in FIG. 5A or FIG. 5B) that additional bandwidth is available. Thus, the system 100 does not receive a request for an upgrade unless bandwidth is available to honor the request. In effect, whenever the cellular phone indicates to the user that additional bandwidth is available, the availability of the additional bandwidth is guaranteed. The system operator is able to control when upgrades are made available, and therefore does not face the risk of making service guarantees that it is unable to fulfill.

Another advantage is that, in some embodiments, the user pays for additional bandwidth only for such times as the user has requested an upgrade. Also, the request for an upgrade is an unambiguous event upon which the operator of the system can base billing for the additional bandwidth. Further, the user interface described hereinabove provides convenient options for the user to upgrade or downgrade in real time the level of service offered by the system to the cellular telephone. The invention also does not require the user to make an advance reservation in order to obtain a service upgrade. Because a graphical display is provided to manage upgrades and downgrades, the user does not need to be familiar with actual service parameters.

Still a further advantage is that the bandwidth request and allocation technique of FIGS. 4-6 can be implemented without modifying the applications.

The processes illustrated in FIGS. 4 and 6 call for the cellular phone to inquire of the system (perhaps at regular time intervals) as to whether additional bandwidth is available for allocation to the cellular phone. Alternatively, the system may automatically provide indications to the cellular phone as to whether additional bandwidth is available, without waiting for an inquiry from the cellular phone.

The processes of FIGS. 4 and 6 and the example user interfaces of FIGS. 5A and 5B were described in the context of a cellular phone and a cellular phone system. However, these aspects of the invention are also applicable in other environments. The term "communication unit", as used herein and in the appended claims, refers not only to cellular phones but also to other wireless devices that operate with shared communication systems, including PDAs (personal digital assistants) as well as laptop computers and other computers that are equipped for mobile communication. The term "communication unit" also refers to any device that receives or transmits data through a shared communication channel. Another example of a communication unit is a personal computer or other computing device that engages in data communication via a cable modem. Thus the teachings of the present invention are applicable generally to allocation of bandwidth in any shared communication channel and to user interfaces to be provided in any of the types of communication unit referred to above.

If the cellular phone (or other type of communication unit, as the case may be) is arranged to automatically select an application to receive the benefit of an upgrade, the selection of the application may be performed in accordance with a previously proposed algorithm known as "complete optimization". Complete optimization relies on functions that are known as service valuation functions, in which a service valuation for an application varies with the quantity of bandwidth allocated to the application. Service valuation functions may be derived from objective measurements such as signal to noise ratio, but are more commonly determined on the basis of studies of subjective perceptions of users. The shape of a service valuation function may depend on characteristics of the application in question, maximum and minimum bit rate, and tiered service type (if applicable).

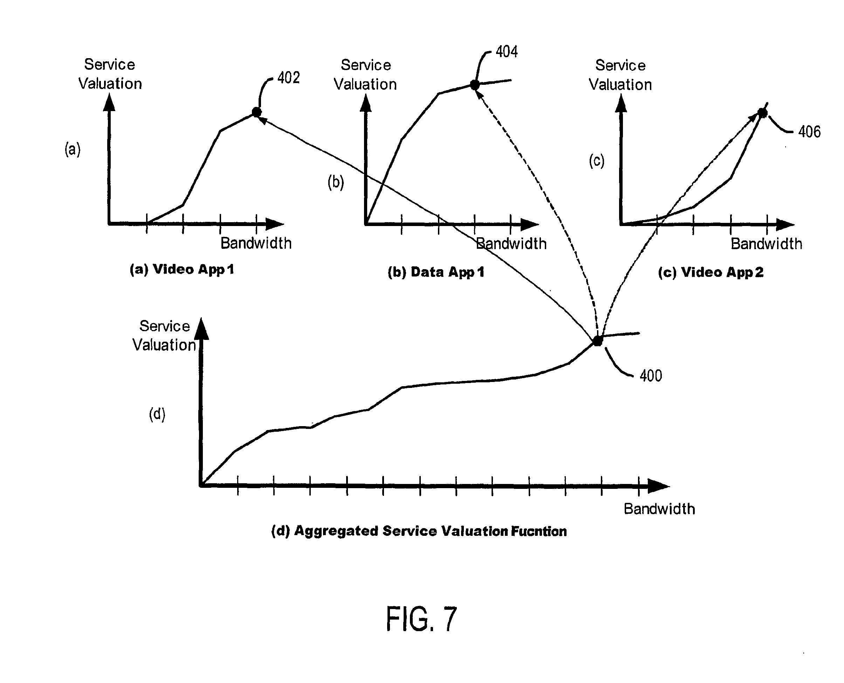

Referring now to FIG. 7, each one of portions (a), (b) and (c) of FIG. 7 illustrates a respective service valuation function. In the graphs shown in portions (a), (b) and (c) of FIG. 7, the horizontal axis represents a quantity of bandwidth allocated to an application, and the vertical axis represents the valuation of the bandwidth by the application. In portion (a) of FIG. 7, a valuation function having an "S" shape is shown. Such a valuation function is typical for some video applications. Portion (b) of FIG. 7 shows a valuation function having a concave shape, which is typical of some data applications. The concave shape indicates that the application is well adaptive and insensitive to bandwidth changes over a wide range. Portion (c) of FIG. 7 shows a valuation function having a convex shape which is typical of other types of video applications. The convex shape indicates that the application is sensitive to bandwidth variations.

In order that the service valuation functions for various applications may be considered together in a single set of calculations, the respective valuation functions may be normalized and then scaled to reflect relative values of the applications. Relative valuation among the applications may be based, for example, on studies of subjective ratings among a sample of users. After scaling the valuation functions, the valuation functions are renormalized to produce comparable service valuations.

Complete optimization then proceeds by considering every possible combination of valuation functions (i.e., every possible allocation of available bandwidth) among the competing applications. The combination (allocation) which results in the highest total of the respective service valuations is selected as the optimal allocation.

Portion (d) of FIG. 7 shows an aggregated service valuation function for the set of applications which correspond to the valuation functions shown in portions (a), (b) and (c) of FIG. 7. The horizontal axis in portion (d) of FIG. 7 represents the total amount of bandwidth available for allocation among the set of applications. The vertical axis in portion (d) represents the highest possible total of respective service valuations of the applications for the total amount of available bandwidth. For a particular total amount of available bandwidth, an operating point 400 for the aggregated service valuation function is obtained. From the optimal allocation that resulted in the aggregate function operating point 400, respective individual application operating points 402, 404 and 406 are obtained for the respective service valuation functions of the individual applications.

When additional bandwidth becomes available for allocation, either because an additional quantity of bandwidth has been made available or because an application has been terminated or has otherwise dropped out of competition for bandwidth, complete optimization calls for the aggregated service valuation function to be updated by finding a new operating point for the aggregated service valuation function that represents the highest possible total of valuations from the respective competing applications. The individual application operating points are then determined by allocating the available bandwidth among the applications according to the updated aggregated service valuation function. This process may result in either an increase or decrease of the individual allocation of bandwidth to each application, without any external constraint.

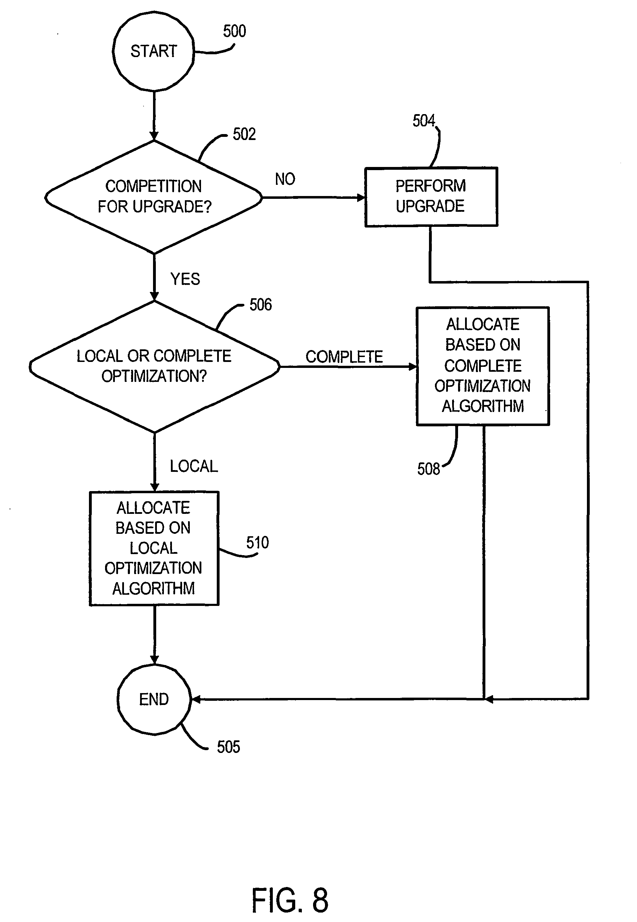

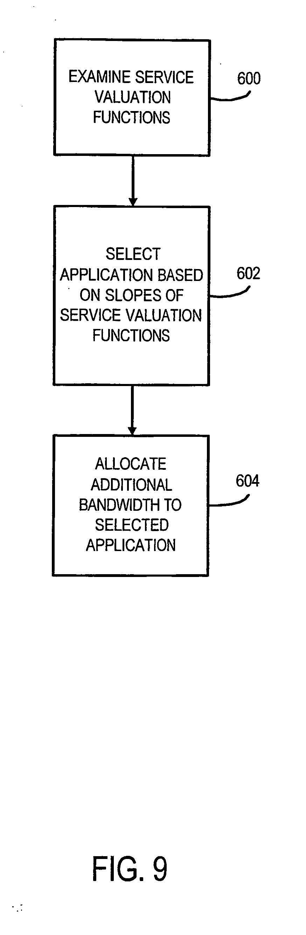

In accordance with the example of the present invention, an alternative bandwidth allocation algorithm, which the present inventors refer to as "local optimization", may be substituted in some or all cases for complete optimization. A process for performing bandwidth allocation according to the example of the invention will now be described with reference to FIGS. 8 and 9. The process of FIGS. 8 and 9 may be initiated, for example, whenever bandwidth becomes available for allocation.

The process starts at 500 in FIG. 8 and proceeds to 502, at which it is determined whether two or more applications are competing for the additional bandwidth. This determination may include identifying the competing applications. If a negative determination is made at 502, i.e., if only one application is to receive the additional bandwidth, then the bandwidth allocation to that application is upgraded, as indicated at 504, and the process ends (505). However, if it is determined at 502 that two or more applications are in competition for the bandwidth, then it is determined, as indicated at 506, whether to allocate the bandwidth in accordance with a complete optimization algorithm or in accordance with a local optimization algorithm. This determination may be made in a number of ways. For example, the local optimization algorithm may be employed most of the time, and the complete optimization algorithm may be employed only for every Nth allocation. Alternatively, the local optimization algorithm may be employed each time, unless a predetermined time period has elapsed since the last complete optimization. If the time period has elapsed, then the complete optimization algorithm may be employed rather than the local optimization algorithm. The determination may, instead or in addition, be based on the number of competing applications. Other considerations for selecting between local and complete optimization are also contemplated.

In whatever manner of making the determination of 506, if it is determined that complete optimization is to be employed, then performance of the complete optimization algorithm follows, as indicated at 508, and the process then ends (505). However, if it is determined that the local optimization algorithm is to be employed, then performance of the local optimization algorithm proceeds, as indicated at 510 and described in more detail with reference to FIG. 9.

In accordance with the example of the invention, the local optimization algorithm begins at 600 in FIG. 9, by examining the respective service valuation functions of the applications that are competing for the additional bandwidth. It will be appreciated that each service valuation function has a current operating point which corresponds to the amount of bandwidth allocated to the respective application prior to the present allocation process. Next, at 602, it is determined which of the service valuation functions has the highest slope at its current operating point. The application corresponding to the service valuation function having the highest slope is then selected. If two or more of the service valuation functions are tied in terms of having the highest slope at the current operating point, then one of the applications corresponding to these service valuation functions is selected. The selection among tied applications may be made in a number of ways, including randomly or by round robin.

After 602, all of the additional bandwidth available for allocation is allocated, as indicated at 604, to the application that was selected at 602. The local optimization algorithm operates with the constraints that all of the available additional bandwidth is allocated to a single one of the competing applications, and the local optimization algorithm does not allow bandwidth to be taken away from any application at a time when the total amount of bandwidth for the competing applications is being increased.

The local optimization algorithm provided in accordance with the example of the invention may be advantageous in that it may be less computationally intensive than the complete optimization algorithm. Also, the local optimization algorithm does not allow performance of currently running applications to be downgraded by taking away bandwidth at times when the total available bandwidth is being increased.

As indicated above, the allocation process of FIGS. 8 and 9 may be performed by a cellular phone or other communication unit when a bandwidth upgrade is selected and implemented in accordance with the processes of FIGS. 4 and 6. The allocation process of FIGS. 8 and 9 is also applicable to other environments. For example, the allocation process of FIGS. 8 and 9, or local optimization alone, may be employed by a communication system like that shown in FIG. 2 to allocate bandwidth among competing applications spread across a number of different communication units. For purposes of such allocation , each communication unit may be regarded as being itself a competing application. In the example, the service valuation function that corresponds to a given communication unit may be scaled so as to have a higher valuation as compared to other communication units, if the user of the communication unit has paid a premium to the operator of the communication system.

The local optimization algorithm and/or the process of FIGS. 8 and 9 is also applicable to shared communication systems other than wireless systems. Also, a system or a communication unit may utilize local optimization without ever employing complete optimization.

The service upgrade feature, including displays of available and/or currently allocated bandwidth as described above in connection with FIGS. 4-6, may enable operators of communication systems to offer premium services and to obtain additional revenues from users of the communication systems. For example, the upgrade feature may encourage users to select upgrades, thereby increasing the utilization of available bandwidth and allowing the operator to charge the users for the increased utilization. Also, users may be charged a premium service fee for making the upgrade feature available on the users' communication units. In some embodiments, subscribers to a premium service may be guaranteed access to an upgrade when the display (e.g, as shown in FIGS. 5A or 5B) indicates bandwidth is available, whereas other users receive access to an upgrade only on a best efforts basis. In other embodiments, subscribers to a premium service have additional bandwidth automatically allocated to their communication units whenever the additional bandwidth is available. In these cases the display may lack the upgrade and downgrade buttons.

Although the system has been described in detail in the foregoing embodiments and examples, it is to be understood that the descriptions have been provided for purposes of illustration only and that other variations both in form and detail can be made thereupon by those skilled in the art without departing from the scope of the invention, which is defined solely by the appended claims.

## Claims

1. A method comprising:
determining a quantity of bandwidth currently allocated to a communication unit (20); and
causing a display component (40) of the communication unit (20) to graphically display information that indicates the determined quantity of bandwidth;
causing the display component (40) to graphically display an indication (210, 222) of at least one additional quantity of bandwidth that is available for allocation to the communication unit (20); and
receiving input from a user of the communication unit (20) to indicate that the user desires that the additional quantity of bandwidth be allocated to the communication unit (20).

2. The method of claim 2, further comprising:
allocating the additional quantity of bandwidth to the communication unit (20) in response to the received input from the user.

3. The method of claim 1, further comprising:
receiving an indication that the additional quantity of bandwidth is allocated to the communication unit (20).

4. The method of claim 2 or 3, further comprising:
updating a display provided on the display component (40) to indicate the allocation of the additional quantity of bandwidth to the communication unit (20).

5. The method of anyone of the preceding claims, further comprising:
receiving input from the user to indicate selection of an application to receive allocation of the additional quantity of bandwidth.

6. A communication unit (20), comprising:
a processor (24);
communication means (30), operatively coupled to the processor (24), for receiving and transmitting information;
a display component (40) operatively coupled to the processor (24);
input means (38), operatively coupled to the processor (24), for receiving input from a user of the communication unit (20); and
a memory (26) operatively coupled to the processor (24) and storing software adapted to control the processor (24) to:
determine a quantity of bandwidth currently allocated to the communication unit (20);
cause the display component (40) to graphically display information that indicates the determined quantity of bandwidth;
control the processor to cause the display component (40) to graphically display an indication (210, 222) of at least one additional quantity of bandwidth that is available for allocation to the communication unit (20); and
control the input means to receive input form the user of the communication unit (2) indicating that the user desires that the additional quantity of bandwidth be allocated to the communication unit (20).

## Patentansprüche

1. Verfahren, umfassend:
das Feststellen eines Umfangs der Bandbreite, die derzeit einer Kommunikationseinheit (20) zugewiesen ist; und
das Veranlassen, dass eine Anzeigekomponente (40) der Kommunikationseinheit (20) graphisch Information darstellt, die den festgestellten Umfang der Bandbreite anzeigt;
das Veranlassen, dass die Anzeigekomponente (40) graphisch eine Angabe (210, 222) mindestens eines zusätzlichen Umfangs an Bandbreite darstellt, der für das Zuweisen an die Kommunikationseinheit (20) verfügbar ist; und
das Empfangen einer Eingabe von einem Benutzer der Kommunikationseinheit (20), die anzeigt, dass der Benutzer wünscht, dass der zusätzliche Umfang an Bandbreite der Kommunikationseinheit (20) zugewiesen wird.

2. Verfahren nach Anspruch 2, ferner umfassend:
das Zuweisen des zusätzlichen Umfangs an Bandbreite an die Kommunikationseinheit (20) als Reaktion auf die empfangene Eingabe von dem Benutzer.

3. Verfahren nach Anspruch 1, zudem umfassend:
das Empfangen einer Angabe, dass der zusätzliche Umfang an Bandbreite der Kommunikationseinheit (20) zugewiesen ist.

4. Verfahren nach Anspruch 2 oder 3,weiterhin umfassend:
das Aktualisieren einer Anzeige, die auf der Anzeigekomponente (40) geliefert wird, damit die Zuweisung des zusätzlichen Umfangs an Bandbreite an die Kommunikationseinheit (20) angezeigt wird.

5. Verfahren nach irgendeinem der vorhergehenden Ansprüche, ferner umfassend:
das Empfangen einer Eingabe von dem Benutzer, die die Wahl einer Anwendung anzeigt, die den zugewiesenen zusätzlichen Umfang an Bandbreite empfangen soll.

6. Kommunikationseinheit (20), umfassend:
einen Prozessor (24);
eine Kommunikationsvorrichtung (30), die funktionell mit dem Prozessor (24) verbunden ist, geeignet zum Empfangen und Übertragen von Information;
eine Anzeigekomponente (40), die funktionell mit dem Prozessor (24) verbunden ist;
eine Eingabevorrichtung (38), die funktionell mit dem Prozessor (24) verbunden ist, geeignet zum Empfangen von Eingaben von einem Benutzer der Kommunikationseinheit (20) empfängt; und
einen Speicher (26), der funktionell mit dem Prozessor (24) verbunden ist und Software speichert, die dafür ausgelegt ist, den Prozessor (24) so zu steuern, dass er:
einen Umfang der Bandbreite feststellt, die derzeit der Kommunikationseinheit (20) zugewiesen ist;
die Anzeigekomponente (40) veranlasst, graphisch Information darzustellen, die den festgestellten Umfang der Bandbreite anzeigt;
die Anzeigekomponente (40) veranlasst, graphisch eine Angabe (210, 222) mindestens eines zusätzlichen Umfangs an Bandbreite darzustellen, der für das Zuweisen an die Kommunikationseinheit (20) verfügbar ist; und
die Eingabevorrichtung so steuert, dass sie eine Eingabe von einem Benutzer der Kommunikationseinheit (2) empfängt, die anzeigt, dass der Benutzer wünscht, dass der zusätzliche Umfang an Bandbreite der Kommunikationseinheit (20) zugewiesen wird.

## Revendications

1. Procédé comprenant les étapes ci-dessous consistant à :
déterminer une quantité de bande passante en cours affectée à une unité de communication (20) ; et
amener un composant d'affichage (40) de l'unité de communication (20) à afficher graphiquement des informations qui indiquent la quantité de bande passante déterminée ;
amener le composant d'affichage (40) à afficher graphiquement une indication (210, 222) d'au moins une quantité de bande passante supplémentaire qui est disponible en vue d'être affectée à l'unité de communication (20) ; et
recevoir une entrée provenant d'un utilisateur de l'unité de communication (20), destinée à indiquer que l'utilisateur souhaite que la quantité de bande passante supplémentaire soit affectée à l'unité de communication (20).

2. Procédé selon la revendication 2, comprenant en outre l'étape ci-dessous consistant à :
affecter la quantité de bande passante supplémentaire à l'unité de communication (20) en réponse à l'entrée reçue à partir de l'utilisateur.

3. Procédé selon la revendication 1, comprenant en outre l'étape ci-dessous consistant à :
recevoir une indication selon laquelle la quantité de bande passante supplémentaire est affectée à l'unité de communication (20).

4. Procédé selon la revendication 2 ou 3, comprenant en outre l'étape ci-dessous consistant à :
mettre à jour un affichage fourni sur le composant d'affichage (40) en vue d'indiquer l'affectation de la quantité de bande passante supplémentaire à l'unité de communication (20).

5. Procédé selon l'une quelconque des revendications précédentes, comprenant en outre l'étape ci-dessous consistant à :
recevoir une entrée en provenance de l'utilisateur, en vue d'indiquer la sélection d'une application destinée à recevoir l'affectation de la quantité de bande passante supplémentaire.

6. Unité de communication (20), comprenant :
un processeur (24) ;
un moyen de communication (30), fonctionnellement couplé au processeur (24), en vue de recevoir et d'émettre des informations ;
un composant d'affichage (40) fonctionnellement couplé au processeur (24) ;
un moyen d'entrée (38), fonctionnellement couplé au processeur (24), pour recevoir une entrée provenant d'un utilisateur de l'unité de communication (20) ; et
une mémoire (26) fonctionnellement couplée au processeur (24) et stockant un logiciel apte à commander au processeur (24) de mettre en oeuvre les étapes ci-dessous consistant à :
déterminer une quantité de bande passante en cours affectée à l'unité de communication (20) ;
amener le composant d'affichage (40) à afficher graphiquement des informations qui indiquent la quantité de bande passante déterminée ;
commander le processeur en vue d'amener le composant d'affichage (40) à afficher graphiquement une indication (210, 222) d'au moins une quantité de bande passante supplémentaire qui est disponible en vue d'être affectée à l'unité de communication (20) ; et
commander le moyen d'entrée en vue de recevoir une entrée en provenance de l'utilisateur de l'unité de communication (2), indiquant que l'utilisateur souhaite que la quantité de bande passante supplémentaire soit allouée à l'unité de communication (20).
